# EUROPEAN PATENT APPLICATION

(11) **EP 0 850 759 A1**
(43) Date of publication of application: **01.07.1998**
(21) Application number: 97112236.1
(22) Date of filing: 17.07.1997
(51) Int. Cl.: B41F 9/00

(54) **Electrostatic assist system and method for monitoring the same**

(30) Priority: 11.10.1996 JP 289275/96; 23.10.1996 JP 299622/96
(71) Applicant: SHINKO CO., LTD., Osaka (JP)
(72) Inventor: Trimborn, Christian Wolfgang, c/o Shinko Co., Ltd., Osaka (JP); Nakauchi, Masayoshi, c/o Shinko Co., Ltd., Osaka (JP)
(74) Representative: von Fischern, Bernhard, Dipl.-Ing.

(57) **Abstract**

Contamination on a static electrode and an ionizer electrode of an electrostatic assist system is automatically and accurately detected in order to avoid occurrence of an accident. Moreover, swift diagnosis of cause of a trouble and repair of an electrostatic assist system are available. An electrostatic assist system (101) possesses an electrode contamination detecting circuit for detecting surface leakage current that flows between the static electrode of a charge unit (8) and a contamination detecting device and a warning device for warning when the surface leakage current is out of a safety range. Check item data for diagnosing conditions of the electrostatic assist system is edited at the electro static assist system side. The edited check item data is transmitted to an external monitoring device (102) through an external communication circuit (139). The external monitoring device memorizes and indicates the check item data.

## Description

This invention relates to an electrostatic assist system and a method for monitoring the same.

In an electrostatic assist system arranged to transfer ink utilizing static electricity, an impression roller for pressing a strip-shaped paper against a metal printing cylinder is charged, this causes the paper to stick to the impression roller and ink in a printing cylinder cell (a depression on a surface of the impression roller) to rise against the cell, and the ink is thereby smoothly transferred to the paper. In such an electrostatic assist system, it is necessary to avoid serious accidents described in the following a to c.
a. Charged current is decreased due to a rise of potential of the impression roller (a rise of potential due to increase in resistance of the impression roller surface or a rise of potential due to charge on the impression roller when the impression roller does not contact the printing cylinder and is not in a printable position) and spark discharge is generated from the impression roller which spark discharge must be absolutely avoided in an electrostatic assist system.
b. Vapor of explosive ink ignites due to overcurrent caused by increase of charged current due to a fall of potential of the impression roller (decrease of resistance of the impression roller surface) which ignition must be absolutely avoided.
c. Vapor of explosive ink ignites due to Joule heat of leakage current from a static electrode caused by conductive carbon contamination on a surface of the static electrode.

A conventional electrostatic assist system measures charged current against output voltage toward a static electrode and warns when the charged current increases or decreases and is out of a safety range in order to avoid the foregoing accidents a to c. A conventional electrostatic assist system is provided with an ionizer electrode for promoting smooth transfer of ink.

In the above-mentioned electrostatic assist system which measures charged current, when the charged current increases, whether the increase was caused by increase of leakage current due to contamination on the surface of the static electrode or by another reason is judged only through visual observation of the static electrode.

A conventional electrostatic assist system is provided with an indication portion which indicates conditions of operation and a damaged part.

An electrostatic assist system is more complex in construction than other copying machines, and it is therefore difficult for a printer to diagnose cause of a trouble and repair the system when an accident occurs. An appointed date of delivery of printed matters is strict and the broken machine needs to be repaired swiftly, but in many cases, it is difficult for a manufacturer of the electrostatic assist system to swiftly deal with the accident for reasons of distance or other conditions.

It is therefore an object of the present invention to provide an electrostatic assist system wherein the foregoing problems are solved, contamination on a static electrode or an ionizer electrode is automatically and accurately detected without depending on visual observation, and occurrence of accidents and troubles is securely prevented.

It is another object of the present invention to provide a method for monitoring an electrostatic assist system wherein, in occurrence of a trouble of the electrostatic assist system, diagnosis of the cause of the trouble and repair are swiftly conducted.

These objects are solved according to the present invention by electrostatic assist system and method for monitoring the same including the features of claims 1, 2, 3, 5, 6 or 7. Furthermore detailed embodiments are described in the dependent claims 4, 8, 9 and 10.

The present invention will be described with reference to the accompanying drawings, in which:
Figure 1 is an enlarged fragmentary sectional view of an embodiment of an electrostatic assist system;
Figure 2 is an enlarged fragmentary sectional view;
Figure 3 is a block diagram of an electrode contamination warning system;
Figure 4 is an explanatory view of a principle and an action;
Figure 5 is an explanatory view of a principle and an action;
Figure 6 is a schematic illustration of a whole portion;
Figure 7 is a schematic illustration of a printing portion;
Figure 8 is a block diagram showing a power supply unit section; and
Figure 9 is a block diagram showing a controlling means section.

Preferred embodiments of the present invention will now be described with reference to the accompanying drawings.

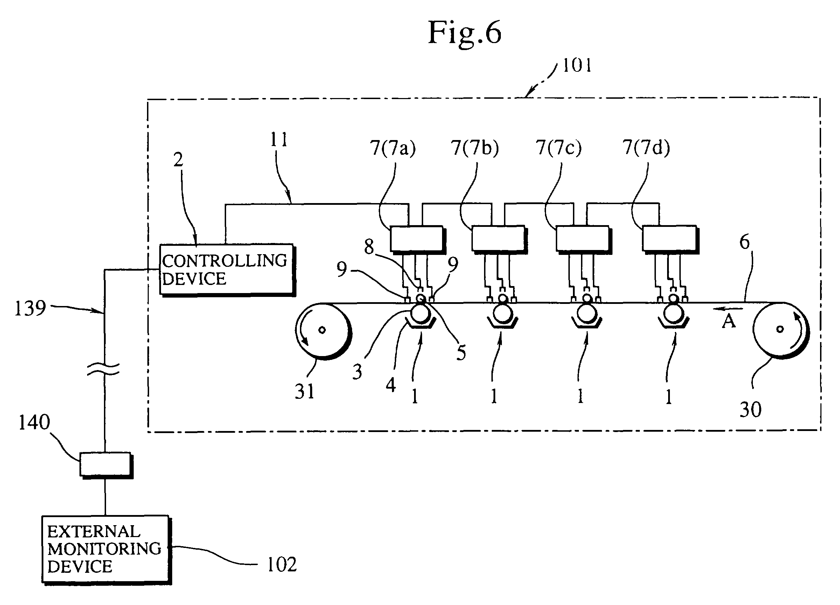

In Figure 6, 101 is an electrostatic assist system installed in an office of a printer, and 102 is an external monitoring device installed in an office of a manufacturer who manufactured the electrostatic assist system 101. The electrostatic assist system 101 is provided with plural (four in the illustration) printing portions 1 and a controlling device 2 for controlling printing of each printing portion 1.

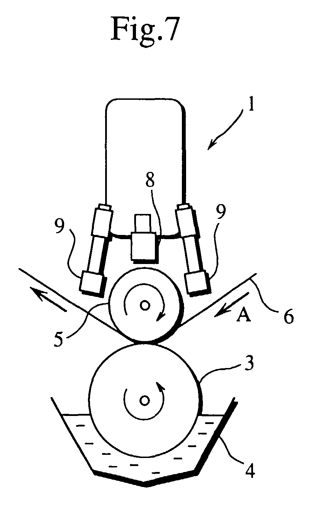

As shown in Figure 6 and Figure 7, each printing portion 1 is provided with a printing cylinder 3, an ink bath 4, an impression roller 5 for pressing an substrate 6 against the printing cylinder 3, a charge unit 8, discharge units 9, and power-supply units 7 electrically connected with the charge unit 8 and the discharge units 9.

A depression (a printing cylinder cell) corresponding to a figure to be printed is arranged on an outer circumferential face of the printing cylinder 3, and the depression is supplied with ink from the ink bath 4. The substrate 6 is sent from a guiding roller 30 to a winding roller 31 in a direction of an arrow A and travels between the impression roller 5 and the printing cylinder 3.

The charge unit 8 negatively charges ink kept in the depression of the printing cylinder 3 through the impression roller 5 and the substrate 6 (in this case, a strip-shaped paper). Ink molecules are thereby charged negatively and repel each other. The ink is attracted toward the substrate 6 and is transferred to the substrate 6. The discharge units 9 arranged at an upstream side and a downstream side of the impression roller 5 rectify potential of the substrate 6 so that the ink of the printing cylinder 3 is accurately charged.

A total of four power-supply units 7a, 7b, 7c, and 7d of the printing portions 1 are connected with the controlling means 2 through a serial communication circuit 11. The ink baths 4 of the printing portions 1 contain ink of different colors (for example, red, blue, yellow, and black) respectively. Each power-supply unit 7a, 7b, 7c, 7d is independently control led by a command signal from the controlling means 2 and printing is conducted. A standard for the serial communication circuit 11 is, for example, RS485 of USEIA (US Electronic Industries Association). In case of using this RS485, it is possible to connect at most 10 power-supply units 7 to the controlling means 2 through one serial communication circuit 11, and this lowers costs for constructing the transmission line.

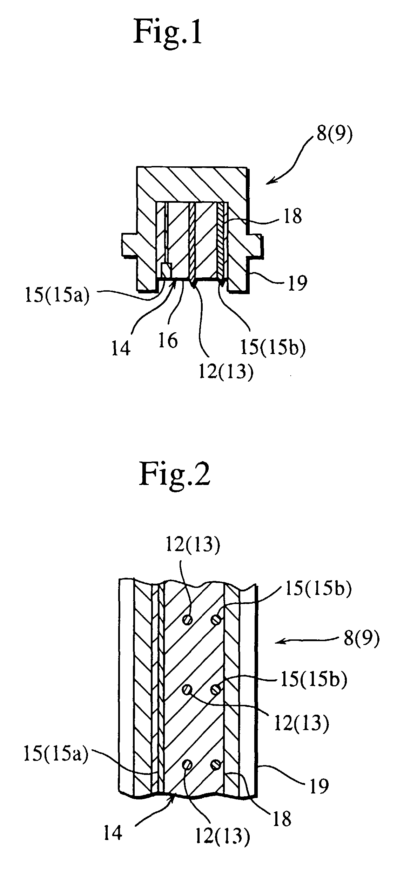

As shown in Figure 1 and Figure 2, a charge unit 8 possesses static electrodes 12, an electrode holder 14 made of insulating material for supporting the static electrodes 12 so that end portions of the static electrodes 12 are exposed on the surface 16 of the electrode holder 14, and contamination detecting devices 15 buried in the electrode holder 14 so that end portions of the contamination detecting devices 15 are exposed on the surface 16 at positions spaced from the static electrodes 12. The static electrodes 12 charge a surface of the printing cylinder 3 with static charge.

The electrode holder 14 of the charge unit 8 comprises a prismatic internal member 18 and an external member 19 to be fitted on the internal member 18, and the needle-shaped static electrodes 12 and the contamination detecting electrodes 15 are buried in the internal member 18. The electrode holder 14 is made of, for example, epoxy resin. Belt-shaped contamination detecting electrodes 15a and needle-shaped contamination detecting electrodes 15b are used as the contamination detecting electrodes 15. The belt-shaped contamination detecting electrodes 15a are arranged near an end portion of the internal member 18 in a width direction when viewed from a surface 16 of the internal member 18 and in parallel with a longitudinal direction of the electrode holder 14, and the needle-shaped contamination detecting electrodes 15b are arranged near the other end portion in the width direction of the internal member 18 and in the longitudinal direction of the electrode holder 14 at regular intervals. The needle-shaped static electrodes 12 are arranged at a middle portion in the width direction of the internal member 18 and in a longitudinal direction of the electrode holder 14 at regular intervals. It is possible to use only either the belt-shaped contamination detecting electrodes 15a or the needle-shaped contamination detecting electrodes 15b as the contamination detecting electrodes 15.

A discharge unit 9 is constructed in the similar way with the charge unit 8. That is to say, a discharge unit 9 possesses ionizer electrodes 13, an electrode holder 14 made of insulating material for supporting the ionizer electrodes 13 so that end portions of the ionizer electrodes 13 are exposed on a surface 16 of the electrode holder 14, and contamination detecting electrodes 15 buried in the electrode holder 14 so that end portions of the contamination detecting electrodes 15 are exposed on the surface 16 at positions spaced from the ionizer electrodes 13.

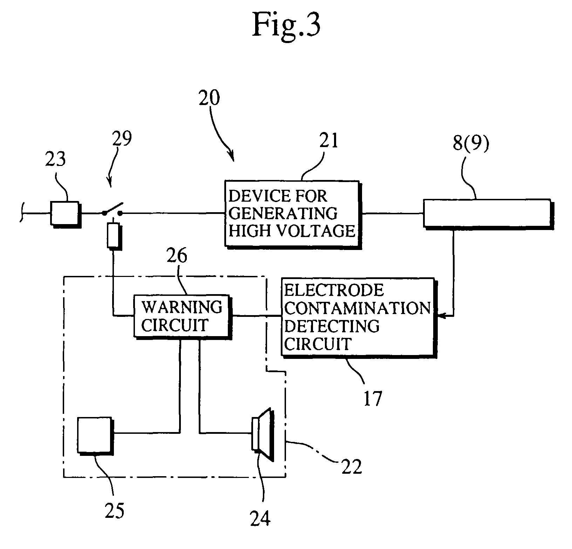

An electrode contamination warning system 20 including a charge unit 8 or a discharge unit 9 is constructed as shown in Figure 3. The warning system 20 is provided with the charge unit 8 or the discharge unit 9, a high voltage generating device 21 for impressing high voltage on the static electrodes 12 or the ionizer electrodes 13, an electrode contamination detecting circuit 17 for detecting contamination of the charge unit 8 or the discharge unit 9, a device 22 for warning when surface leakage current I of the impression roller detected by the electrode contamination detecting circuit 17 is out of a safety range, and an interlock circuit 29. 23 is a primary source. The warning device 22 possesses a buzzer 24, a lamp 25, and a warning circuit 26 for operating the buzzer 24 and the lamp 25 on receipt of a command signal from the electrode contamination detecting circuit 17.

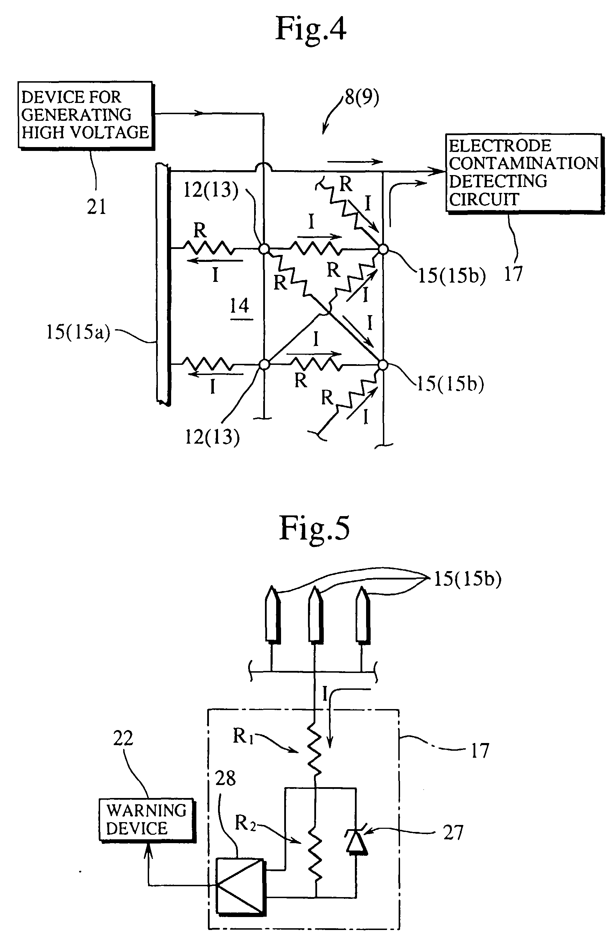

As schematically shown in Figure 4, surface leakage current I that flows between the static electrodes 12 or the ionizer electrodes 13 and the contamination detecting electrodes 15 is detected at a surface 16 of the electrode holder 14 of the charge unit 8. That is to say, the electrode contamination detecting circuit 17 is arranged so that surface leakage current I that flows between the static electrodes 12 or the ionizer electrodes 13 and the contamination detecting electrodes 15 is detected at the surface 16 of the electrode holder 14 of the charge unit 8.

In explaining the principle and the action, the electrode holder 14 of a charge unit 8 is made of an insulating material, and current does not flow between the static electrodes 12 or the ionizer electrodes 13 and the contamination detecting electrodes 15 when the surface of the electrode holder 14 is clean. On the other hand, when the surface of the electrode holder 14 is stained with, for example, dust, electric resistance R of the impression roller is produced and surface leakage current I flows between the static electrodes 12 or the ionizer electrodes 13 and the contamination detecting electrodes 15 (where voltage of approximately -20 kV is impressed). The electric resistance R decreases as the surface is more stained, and the surface leakage current I increases in inverse proportion.

The electrode contamination detecting circuit 17 detects the surface leakage current I . As shown in Figure 5, the electrode contamination detecting circuit 17 has serially-connected first and second resistances R₁ , R₂ and a diode 27 and an amplifier 28 which are arranged in a parallel connection with the second resistance R₂ . The electrode contamination detecting circuit 17 can detect infinitesimal surface leakage current I, and when the surface leakage current I is out of a predetermined safety range (the surface leakage current I exceeds the predetermined safety range), the electrode contamination detecting circuit 17 sends a signal to command the warning means 22 to warn, and the warning means 22 warns in the form of sound or light.

An independent electrode contamination warning system 20 is separately formed for each charge unit 8 (the static electrodes 12) and discharge unit 9 (the ionizer electrodes 13). It is therefore possible to easily judge which charge unit 8 or discharge unit 9 is stained.

According to the electrostatic assist system in the foregoing embodiment, surface leakage current I caused by contamination is not influenced by other conditions for discharge (temperature, humidity, and atmospheric pressure), therefore contamination of the charge units 8 (the static electrodes 12) and the discharge units 9 (the ionizer electrodes 13) is detected automatically and accurately. Moreover, it is possible to accurately judge which electrode is contaminated without visual observation of the charge units 8 (the static electrodes 12) and the discharge units 9 (the ionizer electrodes 13). As a result, the maintenance becomes easy, and a contaminated electrode is not kept using by mistake. This prevents a trouble of the system, inferiority in printing, occurrence of spark discharge, and ignition to vapor of explosive ink.

It is preferable to connect a memory means that memorizes a value of surface leakage current to the electrode contamination detecting circuit 17 in order to memorize history of change in surface leakage current in time sequence. It is desirable to connect the memory means to the warning means 22 and record history of times when warnings were gene rated. It is preferable to arrange the power source to be automatically turned off when surface leakage current I detected by the electrode contamination detecting circuit 17 is out of the predetermined safety range.

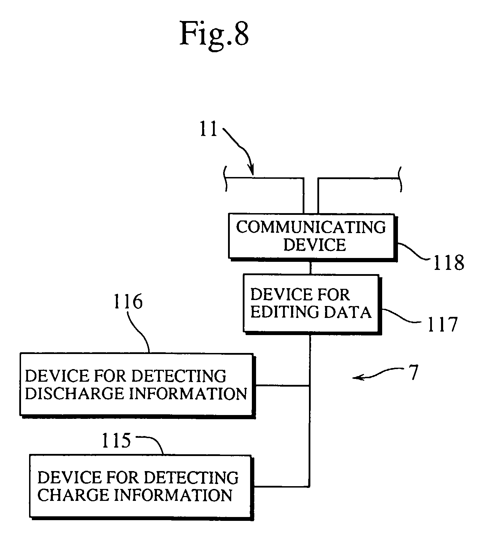

Next, as shown in Figure 8, a power-supply unit 7 is provided with a charge information detecting device 115 which detects various information concerning a static electrode (a charge unit) such as contamination of the static electrode, generation of a spark, or abnormal working, a discharge information detecting device 116 which detects various information concerning an ionizer electrode (a discharge unit) such as contamination of the ionizer electrode, generation of a spark, or abnormal working, a device (means) 117 for editing data detected by the charge (discharge) information detecting means 115, 116, and a communicating device (communicating means) 118 for sending the edited data to the controlling means 2.

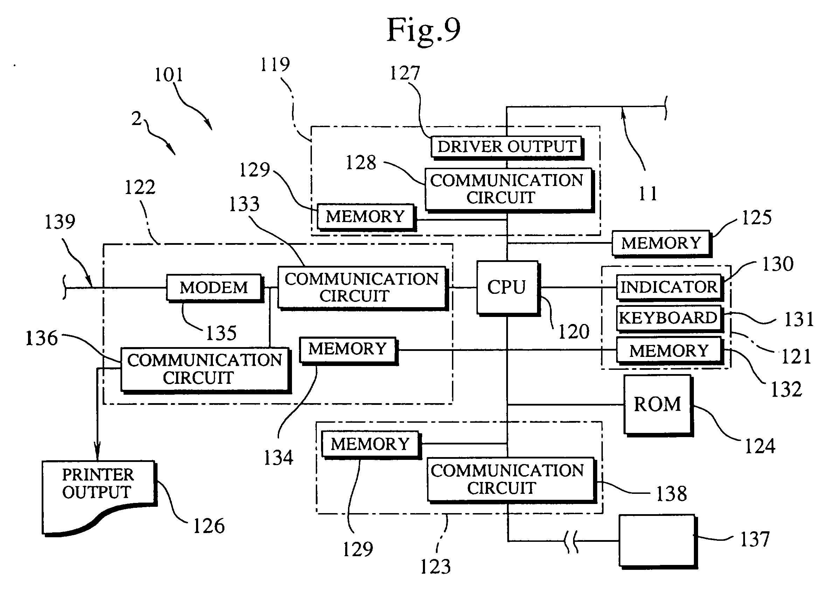

As shown in Figure 9, the controlling means 2 is provided with an internal communicating device 119, a memory 125 for memorizing monitoring data, a central processing unit 120 (CPU), an inputting and indicating device 121, an external communicating device 122, a device 123 for transmitting control instruction data, a storage media 124 (ROM) where controlling program is recorded, and a printer output 126.

The internal communicating means 119 of the controlling means 2 possesses a driver output 127 for serial communication, a communication circuit 128 for serial communication, and a memory 129 for editing data sent from power-supply units 7 (not illustrated). The inputting and indicating means 121 possesses an indicator 130, a keyboard 131, and a memory 132. The external communicating means 122 is provided with a communication circuit 133 for external communication, a memory 134, a modem 135, and a parallel communication circuit 136 for printer output. The means 123 for transmitting control instruction data possesses a communication circuit 138 for sending data to a control indicating device 137 and a memory 129. The control indicating means 137 indicates conditions of an electrostatic assist system 101 at a locale where the system 101 is installed.

The modem 135 of the external communicating means 122 is connected to an external communication circuit 139. The external communication circuit 139 is a line, for example, a public telephone line. As shown in Figure 6, a modem 140 is connected to the external monitoring means 102, and the modem 140 is connected to the external communication circuit 139. That is to say, the electrostatic assist system 101 and the external monitoring means 102 are connected through the modems 135, 140 and the external communication circuit 139. It is possible to use either of an analog line or a digital line as the external communication circuit 139, and when a digital line is used as the circuit 139, a connecting device for digital line is used instead of the modem 135, 140.

In a method for monitoring an electrostatic assist system according to the present invention, check item data for judging conditions of the electrostatic assist system 101 is edited at the electrostatic assist system 101 side, the edited check item data is transmitted to the external monitoring means 102 through the modems 135, 140 and the external communication circuit 139, and the external monitoring means 102 memorizes and indicates the check item data.

In a detailed explanation, the check item data is edited at the electrostatic assist system 101 side in sequence of time (when the data was detected). In further detailed explanation, the check item data is edited at the electrostatic assist system 101 side at regular time intervals. The time interval is preferably three to ten minutes, and it is possible to arrange the time interval to be above that range. The check item data is edited at the electrostatic assist system 101 side also when an accident occurs in the electrostatic assist system 101.

In concrete terms, each power-supply unit 7a, 7b, 7c, 7d is given a specific address beforehand, and is reset when power is supplied. The controlling means 2 sends transmission request successively from the power-supply unit 7a to the power-supply unit 7d. A signal of the transmission request includes the foregoing address, and a power-supply unit 7 that corresponds to the address responds to the signal and the check item data is sent to the controlling means 2, which edits and memorizes data on all of the power-supply units 7a, 7b, 7c, and 7d.

The check item data herein described is data which is necessary for diagnosis of conditions of the electrostatic assist system 101. In other words, the check item data includes both of data for forecasting the part of the electrostatic assist system 101 where a trouble or an accident might occur and data for diagnosis of cause of a trouble and a method for repair when a trouble or an accident occurs in the electrostatic assist system 101.

The check item data comprises a power-supply module overheat signal, an ionizer electrode contamination signal, an ionizer electrode spark generation signal, an ionizer electrode impressed voltage falling/rising/abnormal signal, a discharged inter lock right/wrong signal, an ionizer electrode predetermined voltage supply right/wrong signal, an ionizer electrode primary source on/off signal, a static electrode spark generation signal, a charged interlock right/wrong signal, a static electrode predetermined voltage supply right/wrong signal, a static electrode primary source on/off signal, a static electrode contamination signal, a charged current signal, a static electrode impressed voltage signal, a static electrode impressed voltage set value signal, and a communication error signal. Moreover, the check item data includes detection time of the data.

The power-supply module overheat signal warns when a power-supply module has a temperature higher than a certain temperature which causes a trouble or an accident. The ionizer electrode contamination signal includes an ionizer electrode contamination error signal and an ionizer electrode contamination detection signal. The ionizer electrode contamination detection signal informs that contamination of the ionizer electrode is beyond a certain limit (a predetermined limit), and the ionizer electrode contamination error signal informs that contamination of the ionizer electrode is further increased and it is necessary to immediately clean or exchange the ionizer electrode. The ionizer electrode contamination signal is sent from the above-mentioned electrode contamination detecting circuit 17. The ionizer electrode spark generation signal informs generation of a spark at the ionizer electrode.

The ionizer electrode impressed voltage falling/rising/abnormal signal informs that an impressed voltage of the ionizer electrode is above a normal voltage, below a normal voltage, or abnormal. The discharged interlock right/wrong signal informs whether an interlock of the ionizer electrode works normally or not. The ionizer electrode predetermined voltage supply right/wrong signal informs whether a predetermined voltage (for example, +300V) is normally sent from a direct current power-supply of a high voltage generating circuit or not. The ionizer electrode primary source on/off signal informs whether on-off of a primary source of the ionizer electrode is operated normally or not.

The static electrode spark generation signal informs generation of a spark at the static electrode. The charged interlock right/wrong signal informs whether an inter lock of the static electrode works normally or not. The static electrode predetermined voltage supply right/wrong signal informs whether a predetermined voltage (for example, +300V) is normally sent from a direct current power-supply of a high voltage generating circuit or not. The static electrode primary source on/off signal informs whether on-off of a primary source of the static electrode is operated normally or not. The static electrode contamination signal informs that contamination of the static electrode is above a certain limit (a predetermined limit), and that it is necessary to immediately clean or exchange the static electrode when the contamination is further increased. The static electrode contamination signal is sent from the above-mentioned electrode contamination detecting circuit 17. The charged current signal informs whether a value of a charged current is normal or not. The static electrode impressed voltage signal informs whether an impressed voltage of the static electrode is normal or not. The static electrode impressed voltage set value signal informs whether a set value of the impressed voltage of the static electrode is normal or not. The communication error signal informs whether communication between the controlling means 2 and the power-supply units 7 is normal or not.

The check item data includes operating time of the electrostatic assist system 101. The operating time is edited as data of times when the electrostatic assist system 101 started and halted including the year, month, day, hour, and minute. It is also preferable to arrange the time to include the second if necessary.

The check item data edited and memorized by the controlling means 2 is transmitted to the external monitoring means 102 through the modems 135, 140 and the external communication circuit 139. The external monitoring means 102 is installed in an office of a manufacturer of the electrostatic assist system 101. The external monitoring means 102 in the office memorizes and indicates the check item data. This enables a staff of the manufacturer in the office of the manufacturer to examine conditions of the electrostatic assist system 101 installed in an office of the printer.

If a trouble which can be repaired by a staff of the printer occurs, the manufacturer's staff instructs the printer's staff a method to repair the system by telephone, facsimile, or personal computer communication. If a staff of the manufacturer is necessary or if exchange of parts is necessary, an expert staff of the manufacturer goes to the printer's office with necessary tools and parts. Time required for restoration of the electrostatic assist system 101 is extremely shortened in comparison with a conventional case.

If an expert staff of the manufacturer examines the check item data and judges that the electrostatic assist system 101 will have a trouble with high possibility, occurrence of a trouble can be prevented beforehand by informing the details to the printer's side by telephone, facsimile, or personal computer communication.

As described above, owing to cooperation of a staff of the printer and an expert staff of the manufacturer, it is possible to prevent a trouble and repair the electrostatic assist system 101 and increase maintainability (safety). It is therefore possible to shorten a time for which printing operation is ceased, and an appointed date of delivery of printed matters can be fulfilled more strictly in comparison with a conventional system.

It is also preferable to arrange the check item data to comprise a combination (a suitable combination) of at least two of a power-supply module overheat signal, an ionizer electrode contamination signal, an ionizer electrode spark generation signal, an ionizer electrode impressed voltage falling/rising/abnormal signal, a discharged interlock right/wrong signal, an ionizer electrode predetermined voltage supply right/wrong signal, an ionizer electrode primary source on/off signal, a static electrode spark generation signal, a charged interlock right/wrong signal, a static electrode predetermined voltage supply right/wrong signal, a static electrode primary source on/off signal, a static electrode contamination signal, a charged current signal, a static electrode impressed voltage signal, a static electrode impressed voltage set value signal, and a communication error signal.

In some cases, the electrostatic assist system 101 is used with the static electrodes 12 (the charge units 8) off and the ionizer electrodes 13 (the discharge units 9) on. In this case, the check item data comprises a suitable combination of at least two of a power-supply module overheat signal, an ionizer electrode contamination signal, an ionizer electrode spark generation signal, an ionizer electrode impressed voltage falling/rising/abnormal signal, a discharged interlock right/wrong signal, an ionizer electrode predetermined voltage supply right/wrong signal, an ionizer electrode primary source on/off signal, and a communication error signal in order to omit useless check (of the static electrodes 12).

The following Table 1, Table 2, and Table 3 show check item data at each of checking points (the power-supply, the ionizer electrode, the static electrode, and the communicating portion), details of a trouble conjectured from the check item data, and a concrete example of a solution.

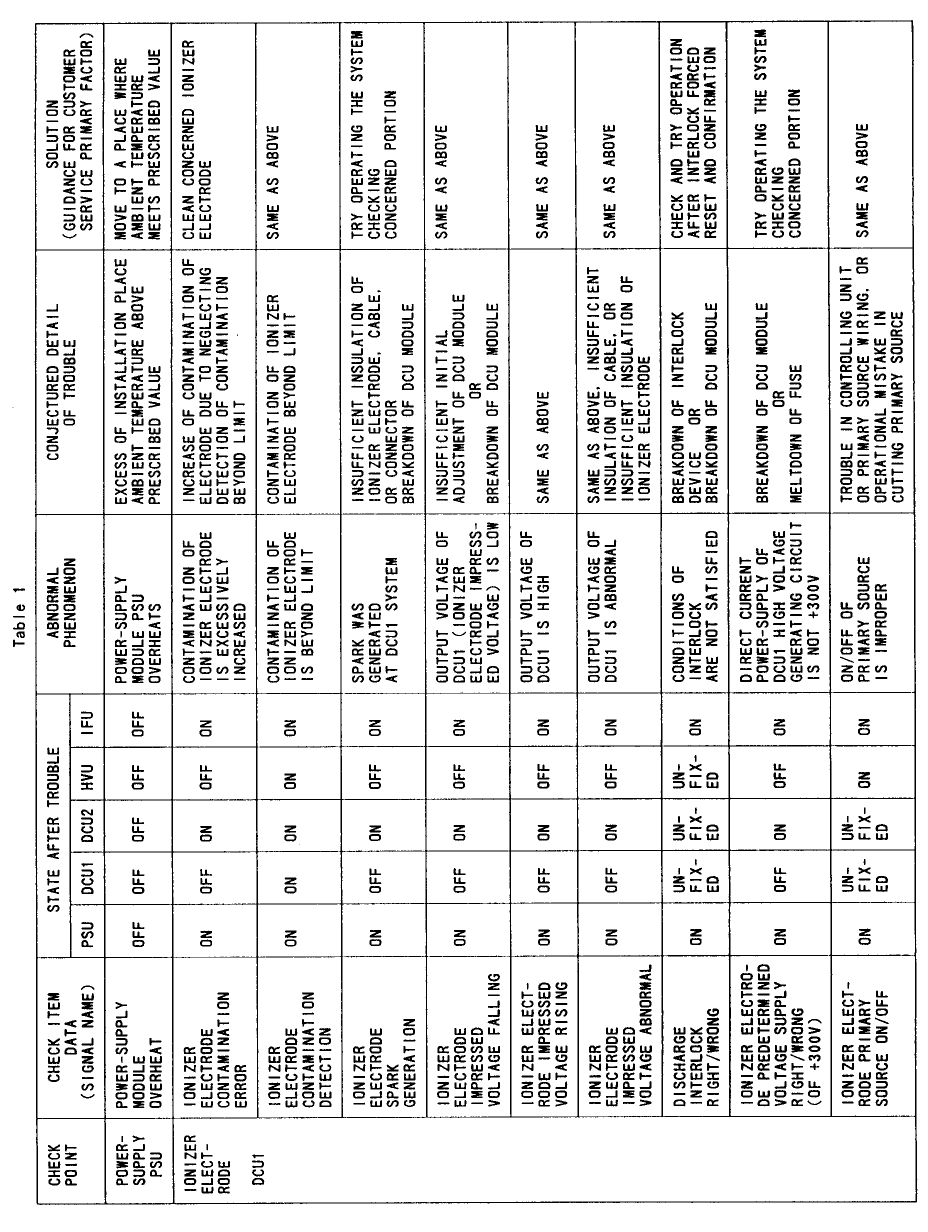

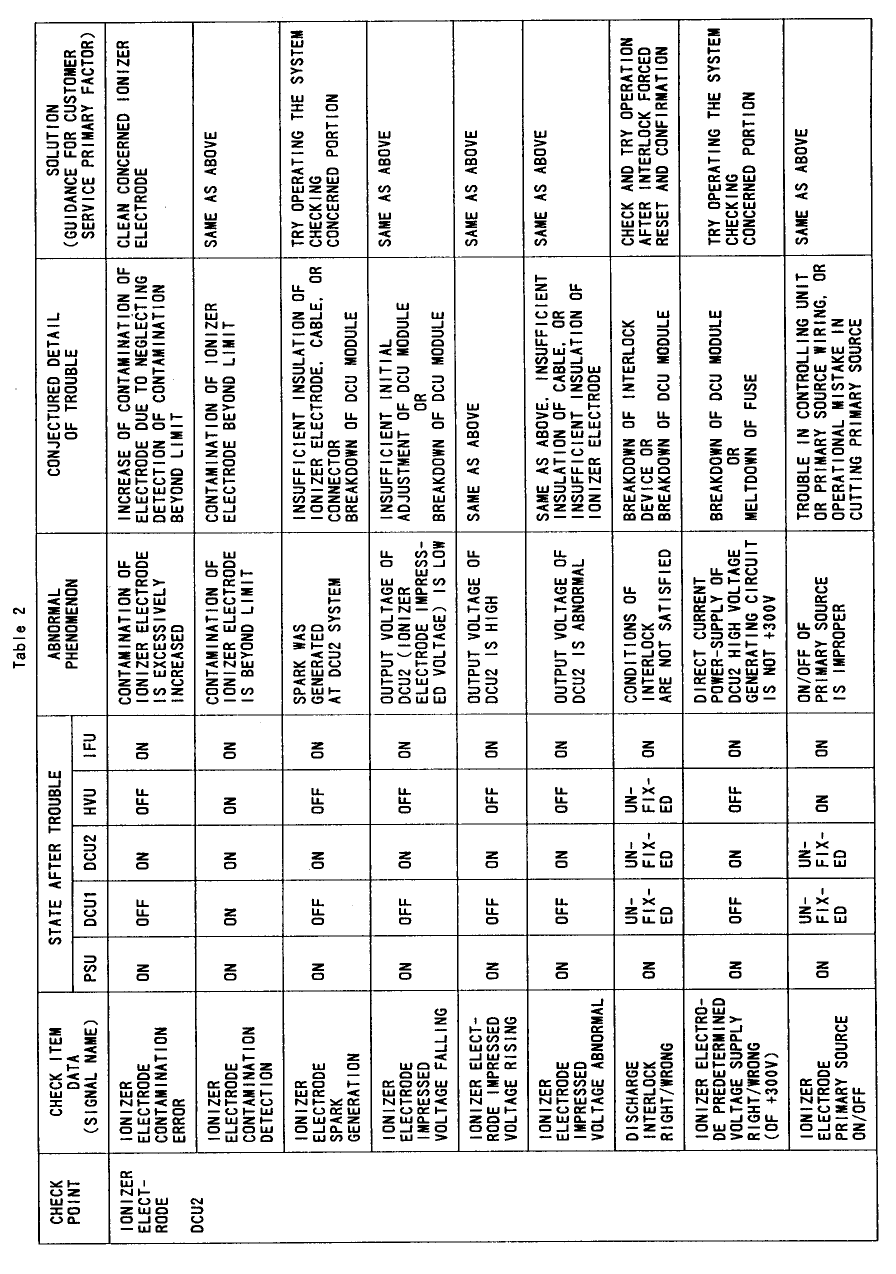

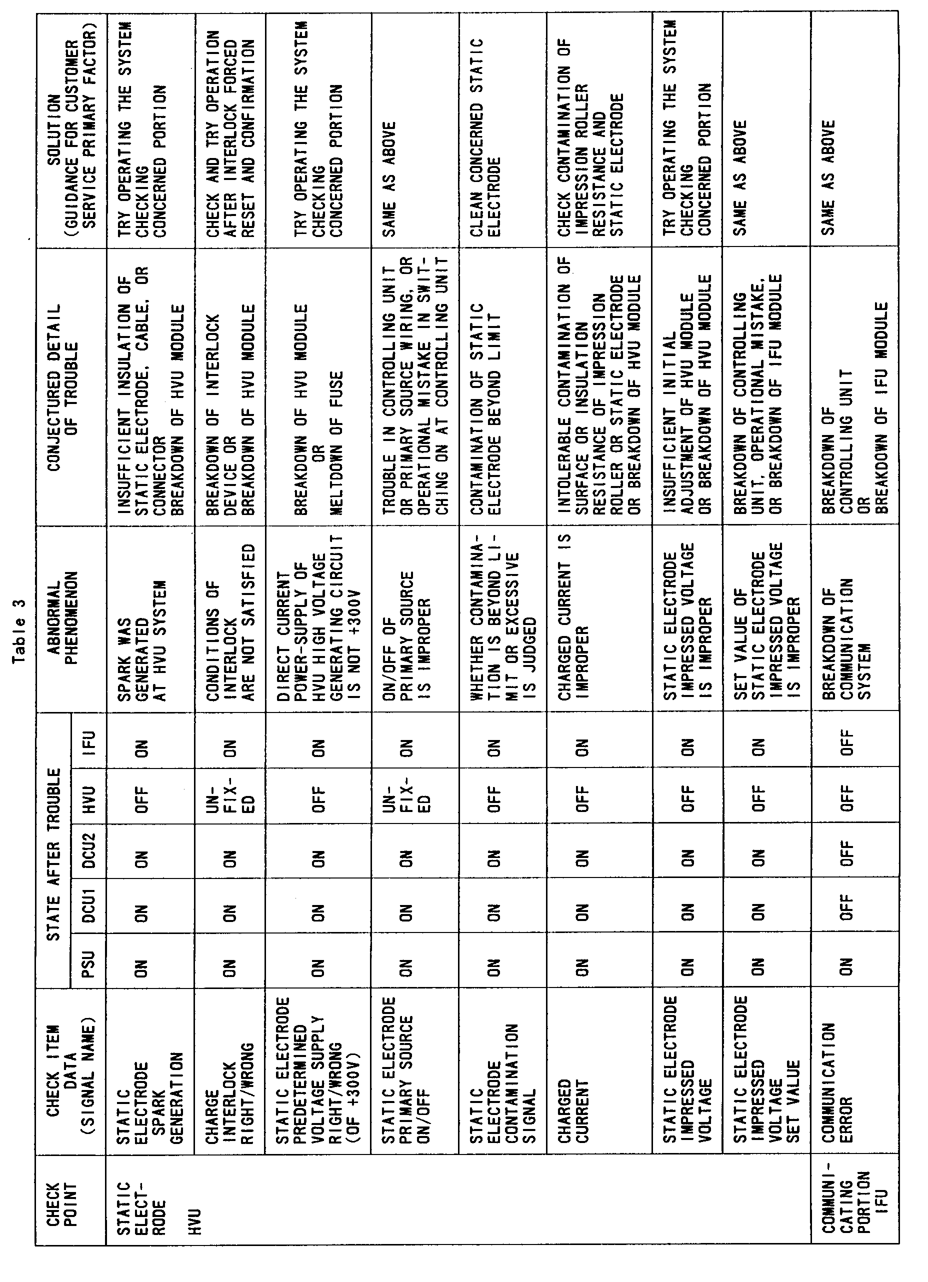

In Table 1, Table 2, and Table 3, an ionizer electrode (DCU1) at an upstream side and an ionizer electrode (DCU2) at a downstream side are used as the ionizer electrodes, and each ionizer electrode is checked according to the check item data.

The electrostatic assist system provides the following effects.

Contamination on a charge unit 8 (a static electrode 12) is detected automatically and accurately by monitoring surface leakage current I. It is therefore possible to prevent a breakdown of the electrostatic assist system, inferiority in printing, occurrence of spark discharge, and ignition to vapor of explosive ink. A contaminated unit (charge unit 8) is specified easily and accurately, and time required for maintenance and repair is shortened.

Moreover, contamination on a discharge unit 9 (an ionizer electrode 13) is detected automatically and accurately by monitoring surface leakage current I. It is therefore possible to prevent a breakdown of the electrostatic assist system, inferiority in printing, occurrence of spark discharge, and ignition to vapor of explosive ink. A contaminated unit (discharge unit 9) is specified easily and accurately, and time required for maintenance and repair is shortened.

Warning is generated when contamination of a charge unit 8 or a discharge unit 9 is beyond a tolerance limit, and this further assures preventing a breakdown of the system, inferiority in printing, occurrence of spark discharge, and ignition to vapor of explosive ink.

The method for monitoring an electrostatic assist system of the present invention provides the following effects.

Diagnosis of cause of a trouble and a method of repair, and forecast of occurrence of a trouble of an electrostatic assist system 101 installed at a printer are conducted by a staff in the office of the manufacturer of the electrostatic assist system 101. As a result, the electrostatic assist system 101 is swiftly repaired in case of a breakdown of the system. This shortens a time for which the system is out of operation, and an appointed date of delivery of printed matters can be fulfilled more strictly in comparison with a conventional case.

Conditions of the electrostatic assist system 101 are monitored in every predetermined time, and the electrostatic assist system 101 can be diagnosed in detail.

Conditions of the electrostatic assist system 101 when a trouble occurred are monitored, and this facilitates diagnosis of cause of the trouble.

Diagnosis of cause of a trouble and a method of repair, and forecast of occurrence of a trouble of the electrostatic assist system 101 are conducted by a staff in the office of the manufacturer of the electrostatic assist system 101 with higher accuracy.

The detection time of the check item data is recorded, and diagnosis of cause of a trouble and a method of repair, and forecast of occurrence of a trouble of the electrostatic assist system 101 are conducted with high accuracy.

In case of using the system with the static electrode 12 off and the ionizer electrode 13 on, diagnosis of cause of a trouble and a method of repair, and forecast of occurrence of a trouble of the electrostatic assist system 101 are accurately conducted with minimum data.

While preferred embodiments of the present invention have been described in this specification, it is to be understood that the invention is illustrative and not restrictive, because various changes are possible within the spirit and indispensable features.

## Claims

1. An electrostatic assist system having a static electrode (12) for electrostatically charging a surface of a printing cylinder (3), comprising:
a charge unit (8) possessing said static electrode (12), an electrode holder (14) made of an insulating material for holding said static electrode (12) with an end portion of the static electrode (12) exposed on a surface (16) of the electrode holder (14), and a contamination detecting electrode (15) to be buried in said electrode holder (14) with an end portion of the contamination detecting electrode (15) exposed on the surface (16) at a position spaced from said static electrode (12); and
an electrode contamination detecting circuit (17) for detecting surface leakage current (I) which flows between said static electrode (12) and the contamination detecting electrode (15) at the surface (16) of the electrode holder (14) of said charge unit (8).

2. An electrostatic assist system having an ionizer electrode (13) for discharging a substrate (6), comprising:
a discharge unit (9) possessing said ionizer electrode (13), an electrode holder (14) made of an insulating material for holding said ionizer electrode (13) with an end portion of the ionizer electrode (13) exposed on a surface (16) of the electrode holder (14), and a contamination detecting electrode (15) to be buried in said electrode holder (14) with an end portion of the contamination detecting electrode (15) exposed on the surface (16) at a position spaced from said ionizer electrode (13); and
an electrode contamination detecting circuit (17) for detecting surface leakage current (I) which flows between said ionizer electrode (13) and the contamination detecting electrode (15) at the surface (16) of the electrode holder (14) of said discharge unit (9).

3. An electrostatic assist system having a static electrode (12) for electrostatically charging a surface of a printing cylinder (3) and an ionizer electrode (13) for discharging a substrate (6), comprising:
a charge unit (8) possessing said static electrode (12), an electrode holder (14) made of an insulating material for holding said static electrode (12) with an end portion of the static electrode (12) exposed on a surface (16) of the electrode holder (14), and a contamination detecting electrode (15) to be buried in said electrode holder (14) with an end portion of the contamination detecting electrode (15) exposed on the surface (16) at a position spaced from said static electrode (12);
a discharge unit (9) possessing said ionizer electrode (13), an electrode holder (14) made of an insulating material for holding said ionizer electrode (13) with an end portion of the ionizer electrode (13) exposed on a surface (16) of the electrode holder (14), and a contamination detecting electrode (15) to be buried in said electrode holder (14) with an end portion of the contamination detecting electrode (15) exposed on the surface (16) at a position spaced from said ionizer electrode (13); and
an electrode contamination detecting circuit (17) for detecting surface leakage current (I) which flows between said static electrode (12) and the contamination detecting electrode (15) and surface leakage current ( I ) which flows between the ionizer electrode (13) and the contamination detecting electrode (15) at the surfaces (16) of the electrode holders (14) of the charge unit (8) and the discharge unit (9).

4. The electrostatic assist system as set forth in claim 1, 2, or 3, characterized in that means (22) for warning when the surface leakage current ( I ) detected by the electrode contamination detecting circuit (17) is out of a safety range.

5. A method for monitoring an electrostatic assist system, comprised by the steps of:
check item data for diagnosing conditions of an electrostatic assist system (101) having a static electrode (12), an ionizer electrode (13), and controlling means (2) for controlling operation of the static electrode (12) and the ionizer electrode (13) is edited at the electrostatic assist system (101) side;
the edited check item data is transmitted to external monitoring means (102) through an external communication circuit (139); and
said external monitoring means (102) memorizes and indicates said check item data.

6. A method for monitoring an electrostatic assist system comprising the steps of:
check item data for diagnosing conditions of an electrostatic assist system (101) having a static electrode (12), an ionizer electrode (13), and controlling means (2) for controlling operation of the static electrode (12) and the ionizer electrode (13) is edited at the electrostatic assist system (101) side at regular time intervals;
the edited check item data is transmitted to external monitoring means (102) through modems (135, 140) and an external communication circuit (139); and
said external monitoring means (102) memorizes and indicates said check item data.

7. A method for monitoring an electrostatic assist system comprising the steps of:
check item data for diagnosing conditions of an electrostatic assist system (101) having a static electrode (12), an ionizer electrode (13), and controlling means (2) for controlling operation of the static electrode (12) and the ionizer electrode (13) is edited at the electrostatic assist system (101) side when a trouble occurs to the electrostatic assist system (101);
the check item data is transmitted to external monitoring means (102) through modems (135, 140) and an external communication circuit (139); and
said external monitoring means (102) memorizes and indicates said check item data.

8. The method for monitoring an electrostatic assist system as set forth in claim 5, 6, or 7, characterized in that said check item data comprises a combination of at least two of a power-supply module overheat signal, an ionizer electrode contamination signal, an ionizer electrode spark generation signal, an ionizer electrode impressed voltage falling/rising/abnormal signal, a discharged interlock right/wrong signal, an ionizer electrode predetermined voltage supply right/wrong signal, an ionizer electrode primary source on/off signal, a static electrode spark generation signal, a charged inter lock right/wrong signal, a static electrode predetermined voltage supply right/wrong signal, a static electrode primary source on/off signal, a static electrode contamination signal, a charged current signal, a static electrode impressed voltage signal, a static electrode impressed voltage set value signal, and a communication error signal.

9. The method for monitoring an electrostatic assist system as set forth in claim 5, 6, or 7, characterized in that the static electrode (12) is turned off and the ionizer electrode (13) turned on, and the check item data comprises a combination of at least two of a power-supply module overheat signal, an ionizer electrode contamination signal, an ionizer electrode spark generation signal, an ionizer electrode impressed voltage falling/rising/abnormal signal, a discharged interlock right/wrong signal, an ionizer electrode predetermined voltage supply right/wrong signal, an ionizer electrode primary source on/off signal, and a communication error signal.

10. The method for monitoring an electrostatic assist system as set forth in claim 5, 6, or 7, characterized in that the check item data comprises a combination of at least two of a power-supply module overheat signal, an ionizer electrode contamination signal, an ionizer electrode spark generation signal, an ionizer electrode impressed voltage falling/rising/abnormal signal, a discharged interlock right/wrong signal, an ionizer electrode predetermined voltage supply right/wrong signal, an ionizer electrode primary source on/off signal, a static electrode spark generation signal, a charged interlock right/wrong signal, a static electrode predetermined voltage supply right/wrong signal, a static electrode primary source on/off signal, a static electrode contamination signal, a charged current signal, a static electrode impressed voltage signal, a static electrode impressed voltage set value signal, and a communication error signal, and said check item data includes detection time of the data.
